# DEMANDE DE BREVET EUROPEEN

(11) **EP 1 114 775 A1**
(43) Date de publication de la demande: **11.07.2001**
(21) Numéro de dépôt: 99403097.1
(22) Date de dépôt: 09.12.1999
(51) Int. Cl.: B65B 9/04, A45D 40/00, B29C 69/00, B65D 1/02, G09F 5/04

(54) **Conteneur plat pour échantillons**

(71) Demandeur: Sicofor, 28200 Marboue (FR)
(72) Inventeur: Poignant, Michel, 92200 Neuilly (FR)
(74) Mandataire: Rémont, Claude

(57) **Abrégé**

On forme un moule dont le volume intérieur correspond à l'enveloppe extérieure requise pour le conteneur (2). On prépare un noyau correspondant à la forme requise pour la cavité (14) que l'on veut ménager à l'intérieur du conteneur (2). On place ledit noyau dans le volume intérieur du moule et on injecte sous pression dans ledit volume intérieur une matière plastique appropriée, de manière à constituer une enveloppe comprenant deux parois (5, 6) sensiblement parallèles s'étendant respectivement à une distance faible prédéterminée l'une de l'autre entre deux bords latéraux communs (9, 10), avec un bord transversal commun (16) du côté du goulot (14b). On injecte à l'intérieur de l'enveloppe le produit à conditionner. On ferme le bord transversal (15) du corps (14a) par soudure de la matière plastique.

## Description

La présente invention concerne un procédé pour réaliser un conteneur plat sensiblement en forme de flacon adapté à contenir un échantillon de petit volume d'un produit sensiblement liquide, notamment d'un produit à base de solvant ou d'alcool tel qu'un produit cosmétique.

La présente invention concerne également un conteneur plat du type précité réalisé par la mise en oeuvre du procédé selon l'invention.

Les produits sensiblement liquides pour lesquels les fabricants recherchent un conteneur adapté à contenir un échantillon de petit volume, par exemple moins de 1cm³, dudit produit sont des produits onéreux des domaines de la cosmétique, de la parfumerie ou de la pharmacie ou parapharmacie.

Les produits cosmétiques liquides sont souvent à base de solvant, et ont souvent une couleur qui est un élément important qu'il faut mettre en évidence, comme par exemple pour les vernis à ongle.

La parfumerie recherche de tels conteneurs pour les parfums ou eaux de toilette, qui sont en général à base d'alcool, et ont aussi une couleur agréable qu'il est important de montrer.

Les produits pharmaceutiques sont par exemple des produits à usage externe, et sont en général à base d'alcool. La couleur importe peu, en général.

On sait réaliser par extrusion des emballages tubulaires adaptés à contenir toutes sortes de pâtes plus ou moins fluides à usage alimentaire, cosmétique ou sanitaire. Ces emballages, même de petites tailles, ont en général, une fois remplis, une épaisseur trop grande pour être utilisés comme supports d'un échantillon de produit adaptés à être insérés dans un support de grande diffusion, par exemple un magazine ou une revue.

On connaît également des pochettes adaptées à contenir un échantillon de produit de consistance crémeuse, par exemple une crème à usage cosmétique ou une sauce à usage alimentaire. Ces pochettes sont relativement plates et sont constituées, soit à partir d'une enveloppe tubulaire dont des tronçons successifs sont scellés aux deux extrémités transversales après introduction du produit à emballer, soit à partir de deux parois de forme sensiblement rectangulaire reliées l'une à l'autre par un moyen de fermeture périphérique étanche, par exemple par soudure ou par collage.

Toutefois, de telles pochettes ne sont pas adaptées à résister à des pressions importantes, par exemple à celles rencontrées lorsque des magazines ou des revues sont empilés les uns sur les autres en vue de leur stockage ou de leur transport. En outre, les parois de ces pochettes sont en général opaques.

Par ailleurs, les emballages de forme tubulaire et les pochettes plates de forme sensiblement rectangulaire ne sont pas adaptés à contenir un produit sensiblement liquide habituellement disponible sur le marché dans un flacon à trois dimensions, chaque flacon ayant de préférence une forme individualisée à laquelle sont attachés aussi bien le fabricant que les consommateurs du produit considéré.

Enfin, l'insertion d'échantillons de forme plate à l'intérieur de revues ou de magazines permettant de viser une clientèle beaucoup plus ciblée que celle touchée par d'autres moyens de communication, il existe un besoin réel pour un procédé du type précité permettant notamment de diffuser à l'intérieur d'un magazine ou d'une revue un conteneur plat du type précité.

Le procédé visé par l'invention comprend les étapes consistant à préparer deux parois reliées l'une à l'autre par leurs bords longitudinaux respectifs, à fermer un premier bord transversal, à injecter le produit à conditionner dans la cavité ainsi formée, puis à fermer le second bord transversal.

Suivant l'invention, ce procédé est caractérisé en ce qu'il comporte les étapes suivantes :
- on prépare deux demi-coquilles adaptées à être pressées l'une contre l'autre pour former un moule d'injection dont le volume intérieur est conformé de manière à former l'enveloppe extérieure requise pour ledit conteneur ;
- on prépare un noyau correspondant à la forme requise pour la cavité que l'on veut ménager à l'intérieur du conteneur, cette cavité comprenant une partie formant corps communiquant avec une partie formant goulot de plus petite dimension transversale ;
- on place ledit noyau dans le volume intérieur dudit moule, et on injecte sous pression dans le volume intérieur dudit moule une matière plastique appropriée, de manière à constituer une enveloppe comprenant deux parois sensiblement parallèles s'étendant respectivement à une distance faible prédéterminée l'une de l'autre entre deux bords latéraux communs, avec un bord transversal commun fermé du côté du goulot ;
- on injecte à l'intérieur de l'enveloppe le produit à conditionner ;
- on ferme l'autre bord transversal du côté du corps par soudure de la matière plastique.

On utilise de préférence comme matière plastique un copolymère d'éthylène et d'acétate de vinyle (EVA).

On peut ainsi fabriquer un conteneur plat adapté à contenir un échantillon de petit volume d'un produit sensiblement liquide, éventuellement très agressif, par exemple à base de solvant, tel qu'un produit cosmétique, ou à base d'alcool, tel qu'un parfum ou un produit pharmaceutique, ce conteneur étant capable de résister aux pressions importantes rencontrées par exemple dans des piles de magazines ou de revues.

En outre, le copolymère EVA est transparent et laisse apparaître la couleur de l'échantillon de produit contenu dans le conteneur.

D'autres particularités et avantages de la présente invention apparaîtront dans la description détaillée ci-après :
Aux dessins annexés, donnés uniquement à titre d'exemples non limitatifs :
- la figure 1 est une vue de dessus d'un premier mode de réalisation d'un conteneur obtenu par la mise en oeuvre du procédé selon la présente invention ;
- la figure 2 est une vue agrandie en coupe selon II-II à la figure 1 ;
- la figure 3 est une vue semblable à la figure 1 d'un autre mode de réalisation de la présente invention ;
- la figure 4 est une vue agrandie en coupe selon IV-IV à la figure 3 ;
- la figure 5 est une vue d'un détail de la figure 4 après cassure du goulot ;
- la figure 6 est une vue partielle semblable à la figure 1 d'un autre mode de réalisation de l'invention.

Le procédé suivant la présente invention est un procédé pour réaliser un conteneur plat 1, 2 sensiblement en forme de flacon adapté à contenir un échantillon de petit volume d'un produit sensiblement liquide tel qu'un produit cosmétique.

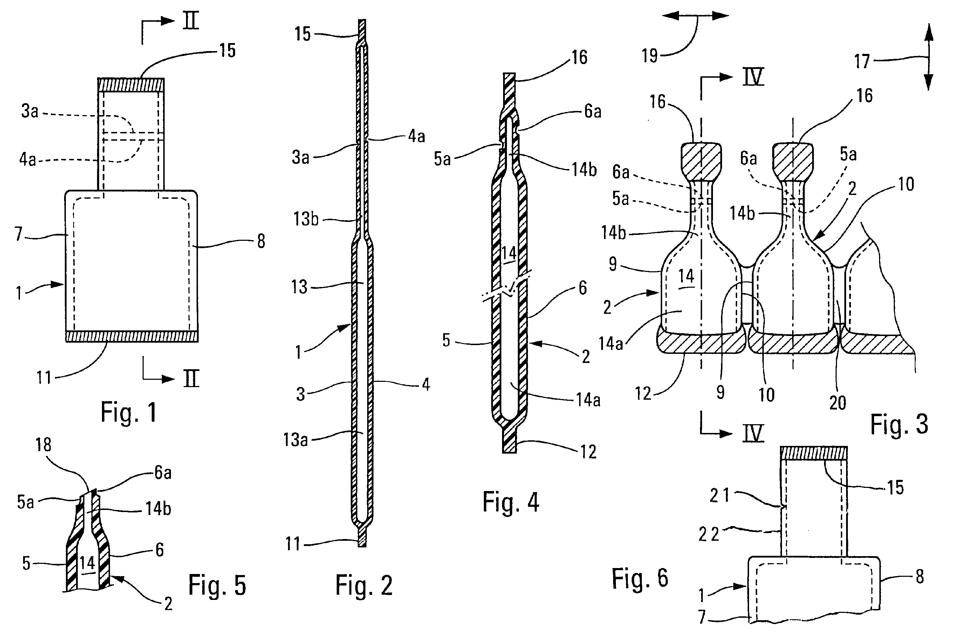

Des exemples de ces flacons sont schématisés aux figures 1 à 5.

Ce procédé comprend les étapes consistant à préparer deux parois 3, 4, 5, 6, reliées l'une à l'autre par leurs bords longitudinaux respectifs 7, 8, 9, 10, à fermer un premier bord transversal 11, 12, à injecter le produit à conditionner dans la cavité 13, 14 ainsi formée puis à fermer le second bord transversal 15, 16.

Suivant la présente invention, ce procédé est caractérisé en ce qu'il concerne les étapes suivantes :
- on prépare deux demi-coquilles adaptées à être pressées l'une contre l'autre pour former un moule dont le volume intérieur est conformé de manière à former l'enveloppe extérieure requise pour ledit conteneur 1, 2 ;
- on prépare un noyau plat en forme de lame correspondant à la forme requise pour la cavité 13, 14 que l'on veut ménager à l'intérieur du conteneur 1, 2, cette cavité 13, 14 comprenant une partie formant corps 13a, 14a, communiquant avec une partie formant goulot 13b, 14b, de plus petite dimension transversale.
- on place ledit noyau dans le volume intérieur du moule, et on injecte sous pression dans le volume intérieur dudit moule une matière plastique appropriée, de manière à constituer une enveloppe comprenant deux parois 3, 4, 5, 6, sensiblement parallèles s'étendant respectivement à une distance faible prédéterminée l'une de l'autre entre deux bords latéraux 7, 8, 9, 10, communs, avec un bord transversal commun 15, 16 fermé du côté du goulot 13b, 14b ;
- on injecte à l'intérieur de l'enveloppe le produit à conditionner ;
- on ferme l'autre bord transversal 11, 12 du côté du corps 13a, 14a par soudure de la matière plastique, par exemple par ultra-sons.

Il faut bien entendu utiliser une matière plastique adaptée à la fois à être injectée sous pression et à être soudée pour former un cordon étanche résistant à la pression.

Dans les exemples représentés, on a ménagé, au niveau du goulot 13b, 14b, sur chaque paroi 3, 4, 5, 6 du conteneur 1, 2, une ligne transversale 3a, 4a, 5a, 6a, de plus faible épaisseur formant ligne de cassure pour ouvrir ledit conteneur 1, 2.

Dans l'exemple représenté aux figures 3,4 et 5, la ligne transversale 5a de plus faible épaisseur ménagée sur la paroi 5 du conteneur 2 est légèrement décalée en direction longitudinale 17 par rapport à l'autre ligne 6a de façon à ménager après cassure le long desdites lignes décalées 5a, 6a une ouverture 18 à bords décalés en biseaux formant applicateur.

Dans cet exemple, on a préparé un moule présentant au moins deux cavités adjacentes dans la direction transversale 19, prévue chacune pour le moulage d'un conteneur 2, ces deux cavités communiquant l'une avec l'autre par une mince ouverture adaptée à former après moulage une nervure 20 reliant par leur bord latéral respectif, les deux conteneurs 2 adjacents correspondants.

On utilise de préférence comme matière plastique un copolymère d'éthylène et d'acétate de vinyle, EVA, en particulier le copolymère connu sous la référence PA538, PA-539, ou PA-540® . Ces trois types de ce copolymère présentent d'excellentes caractéristiques de flexibilité, transparence, ténacité, et sont particulièrement adaptés à la fois à l'injection sous pression et à la soudure. Ils résistent en outre aux solvants ou à l'alcool. Ils sont donc parfaitement adaptés à la fabrication de conteneurs pour échantillons de produits colorés et agressifs tels que vernis à ongle ou parfums et autres.

Le mode de réalisation représenté à la figure 6 correspond au cas où l'on utilise une matière plastique orientée qui présente donc dans une direction du plan une résistance nettement inférieure à celle présentée dans la direction perpendiculaire. Une telle matière plastique orientée est connue par elle-même et peut être déchirée facilement à partir d'une amorce de déchirure.

Dans ces conditions, le conteneur 1 présente sur au moins un bord longitudinal, le bord 7 à la figure, et au niveau du goulot 22 une échancrure 21 constituant une amorce de déchirure permettant de déchirer facilement au niveau de ladite amorce 21 les deux parois 3, 4. A cet effet, la matière plastique a été orientée de telle manière qu'elle présente une résistance faible dans la direction longitudinale 17 permettant une déchirure facile dans la direction transversale 19 à partir de l'amorce 21.

Bien entendu, l'amorce 21 peut être combinée à une ou plusieurs lignes transversales 3a, 4a, 5a, 6a de plus faible épaisseur sur l'un quelconque des modes de réalisation de conteneur 1, 2 suivant l'invention.

L'amorce 21 et/ou les lignes transversales de plus faible épaisseur 3a, 4a, 5a, 6a sont évidemment ménagées de façon à respecter la résistance à la pression exigée du conteneur 1, 2.

Les épaisseurs respectives des parois 3, 4, 5, 6 et l'épaisseur de la cavité 13a, 13a, 14a, 14b sont fixées de manière quelconque compte tenu du cahier des charges à respecter, et en particulier des caractéristiques de la matière plastique utilisée, de la pression à laquelle doit résister le conteneur, et du diamètre des aiguilles utilisables pour injecter le produit visé, cosmétique ou autre, à l'intérieur du conteneur 1, 2.

Bien entendu, la présente invention n'est pas limitée aux modes de réalisation décrits ci-dessus, et on peut apporter à ceux-ci de nombreux changements et modifications sans sortir du domaine de l'invention.

## Revendications

1. Utilisation comme conteneur (1, 2), sensiblement en forme de flacon, adapté à contenir un échantillon de petit volume d'un produit sensiblement liquide tel qu'un produit cosmétique, et à résister, le cas échéant, à des pressions importantes, d'un élément creux obtenu par injection sous pression d'une matière plastique appropriée à l'intérieur d'un moule dont le volume intérieur est conformé de manière à former l'enveloppe extérieure requise pour le conteneur et à l'intérieur duquel est placé un noyau correspondant à la forme requise pour la cavité (13, 14) que l'on veut ménager à l'intérieur du conteneur (1, 2), cette cavité (13, 14) comprenant une partie formant corps (13a, 14a) communiquant avec une partie formant goulot (13b, 14b) de plus petite dimension transversale, dans laquelle on ferme un premier bord transversal (15, 16) du coté du goulot (13b, 14b), on injecte le produit à conditionner dans la cavité (13, 14) ainsi formée, puis on ferme le second bord transversal (11, 12), caractérisée en ce que le moule et le noyau sont conformés de manière telle que l'élément creux comprend deux parois (3, 4; 5, 6) sensiblement parallèles s'étendant respectivement à une distance faible prédéterminée l'une de l'autre et reliées l'une à l'autre le long de deux bords latéraux communs (7, 8; 9, 10) et d'un bord transversal commun (15, 16) du côté du goulot (13b, 14b).

2. Utilisation selon la revendication 1, caractérisée en ce que le conteneur (1, 2) présente au niveau du goulot, sur au moins un bord latéral (7, 8; 9, 10) et/ou au moins une paroi (3, 4; 5, 6) une conformation (21; 3a, 4a; 5a, 6a) formant point ou ligne de rupture préférentielle en vue d'une ouverture facile du flacon.

3. Utilisation selon la revendication 1 ou 2, caractérisée en ce qu'on ménage au niveau du goulot (13a, 14a), sur chaque paroi (3, 4; 5, 6) du conteneur (1, 2), une ligne transversale (3a, 4a; 5a, 6a) de plus faible épaisseur formant ligne de cassure pour ouvrir ledit conteneur.

4. Utilisation selon la revendication 3, caractérisée en ce que la ligne transversale de plus faible épaisseur (5a) ménagée sur l'une (5) des parois est légèrement décalée en direction longitudinale (17) par rapport à l'autre ligne (6a) de façon à ménager après cassure le long desdites lignes décalées (5a, 6a) une ouverture (18) à bords décalés en biseau formant applicateur.

5. Utilisation selon l'une quelconque des revendications précédentes, le conteneur (1, 2) étant réalisé en une matière plastique orientée présentant une résistance moindre à la déchirure dans la direction transversale (19), caractérisée en ce que le conteneur (1, 2) présente sur au moins un bord longitudinal (7, 8; 9, 10) une amorce de déchirure (21), par exemple une échancrure (21).

6. Utilisation selon l'une quelconque des revendication précédentes, caractérisée en ce que l'on donne au bord transversal commun (16) du côté du goulot (14b) une dimension transversale élargie pour former après soudure une zone de préhension (16).

7. Utilisation selon l'une quelconque des revendications précédentes, caractérisée en ce que l'on utilise un moule présentant au moins deux volumes intérieurs adjacents en direction transversale prévus chacun pour le moulage d'un conteneur (2), ces deux volumes intérieurs communiquant l'un avec l'autre par une mince ouverture adaptée à former après moulage une nervure (20) reliant le bord latéral respectif (10, 9) des deux conteneurs (2) adjacents correspondants.

8. Utilisation selon l'une quelconque des revendications précédentes, caractérisée en ce que l'on utilise comme matière plastique un copolymère d'éthylène et d'acétate de vinyle.

9. Conteneur plat (1, 2), sensiblement en forme de flacon, adapté à contenir un échantillon de petit volume d'un produit sensiblement liquide à base de solvant tel qu'un produit cosmétique, caractérisé en ce qu'il est adapté à la mise en oeuvre de l'utilisation selon l'une quelconque des revendications précédentes.
